Europäisches Patentamt

European Patent Office

Office européen des brevets

(19)

(11) Publication number: **0 268 428**
**A2**

(12)

# EUROPEAN PATENT APPLICATION

(21) Application number: **87310001.0**

(22) Date of filing: **12.11.87**

(51) Int. Cl.⁴: **G 03 B 27/04**
**G 03 B 27/22**

(30) Priority: **18.11.86 GB 8627506**

(43) Date of publication of application:
**25.05.88 Bulletin 88/21**

(84) Designated Contracting States:
**AT BE CH DE FR GB IT LI NL SE**

(71) Applicant: **Esselte Letraset Limited**
**St. George's House 195-203 Waterloo Road**
**London SE1 8XJ (GB)**

(72) Inventor: **Houssian, Vazgen John**
**380, Mountain Road**
**Union City New Jersey 07087 (US)**

(74) Representative: **Gallafent, Richard John et al**
**GALLAFENT & CO. 8 Staple Inn**
**London WCIV 7QH. (GB)**

(54) **Exposure units.**

(57) Exposure units for photographic and allied purposes are disclosed. They consist of a clear tube (1) with a slot running through it. Contact exposure e.g. through a negative (2) onto photosensitive material (3) may be effected by resiliently holding an assembly of negative (2) and photosensitive material (3) around the outside of the tube, e.g. using a resilient rubber blanket (4) hooked over the two edges (5,6) of the slot. The assembly of tube (1), sensitised material (2), negative (3) and blanket (4) may be located around a fluorescent tube, which e.g. can be passed in through the slot, and provided the fluorescent tube is located on the axis of the clear tube, and has an even light emission, even exposure is obtained. The exposure unit is very simple to construct and effective in practice.

FIG. 4.

## Description

EXPOSURE UNITS

This invention relates to exposure units for photographic and allied purposes.

In various graphic art processes, photosensitive materials are used in conjunction with imaged sheets, i.e. sheets bearing an image on them, to reproduce that image photographically on some other material. A variety of contact exposure apparatus is conveniently used for this purpose and the most widespread device consists of a so called "light box". Such a device consists generally of a rectangular box-like housing including one or more fluorescent tubes and reflectors, and having a transparent platen constituting one face of the box on which an image material e.g. a photographic negative, and a photosensitive sheet of material may be laid. A cover is conveniently provided to hold the negative and photosensitive material against the platen, and the box may be provided with a lid or the like both to protect the platen and, in the case of U.V. exposure boxes, protect the user.

Such apparatus tends to be fairly bulky and it is difficult to arrange the one or more fluorescent tubes in the base of the box so as to give even illumination over the whole of the platen. Additionally, problems may arise in keeping material adequately flat on the platen: often a vacuum system is needed to ensure good optical contact between negative and photosensitive material, leading to further expense and complication.

Exposure units are known in which material to be exposed is held round the outer surface of a transparent cylindrical member with one or more fluorescent tubes located within it. Thus, British Patent Specification 1267111 discloses exposure apparatus including a rotating transparent cylinder or drum inside a continuous belt, the material to be exposed being fed between the belt and the outer surface of the drum whilst the interior of the drum is illuminated by one or more fluorescent tubes located on the central axis of rotation of the drum or in a cluster spaced therearound. Exposure units of this nature require some sort of electric power to drive the belt and/or the drum and are generally usable only for fairly short term exposures e.g. exposure times of several seconds at most.

British Patent Specification 823314 discloses a hand-held illuminating cylinder which is rolled onto the page to be copied, wrapping the page around it. A copy sheet is placed on the page to be copied prior to it being wrapped around the cylinder. The diameter of the cylinder is chosen according to the size of the page to be copied.

British Patent Specifications 860835 and 828531 both disclose cylinders over which material to be copied is placed. The material is held in place during illumination by means of a blanket, blind or other flexible member wrapped about part of the circumference of the cylinder.

However, these exposure units tend to be complex and expensive to construct, to have complicated arrangements in which the fluorescent tubes are not readily accessible, and to be inconvenient to use.

According to the present invention there is provided an exposure unit as described above and characterised in that the surface of the cylindrical member extends through an arc of less than 360° to provide a slot, and in that the holding means resiliently engages on the edges of the slot.

Advantageously, the width of the slot is greater than the diameter of the fluorescent tube to allow the tube to be introduced into the centre of the cylindrical member laterally.

Preferably the resilient holding means comprises a resilient rubber of like blanket which can be stretched around the exterior convex surface of the cylindrical member. The blanket is preferably not light transmitting, and has an inwardly facing light absorbing surface.

Most conveniently the cylindrical member is formed by cutting a slot in transparent acrylic tubing and the blanket is stretched from one edge of the slot to the other around the exterior of the tubing. The blanket may have a simple hooked rail engaging over the edge of the slot. The arcuate extent of the slotted tube, from one side of the slot to the other, via the acrylic tube is preferably at least 90°, most preferably 180 to 300°.

The fluorescent tube is preferably mounted on an appropriate base on to which the assembly of cylindrical member and exterior resilient blanket may be placed in such a fashion that it locates with the tube at the centre of the cylindrical member. The base on which the tube is mounted may conveniently include the conventional electrical circuitry for energising the illumination tube, for example an appropriate ballast choke and suitable switching apparatus to enable the lamp to be switched on for a selectable period of time. The base may also include appropriate shields or covers in order that when the cylindrical member with its placed in position round the tube, no or little light escapes when the tube is switched on.

By using a resilient blanket simply stretched round the convex surface, excellent contact between negative and photosensitive material is obtained without the need for complex equipment features such as vacuum arrangements.

The invention is illustrated by way of example with reference to the accompanying drawings in which

Figure 1 is a cross section through an assembly of platen, negative sensitised material and blanket,

Figure 2 is a diagram showing how the assembly of Figure 1 is constructed,

Figure 3 is a cross section through a complete exposure unit in use, and

Figure 4 is a diagrammatic longitudinal section of such unit.

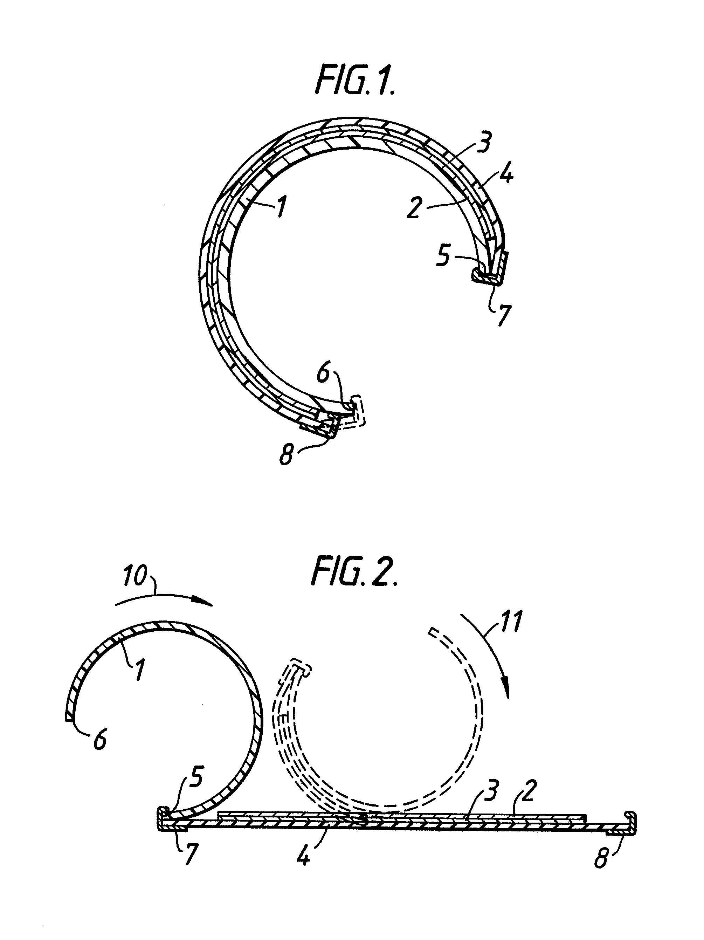

Referring to Figure 1 the assembly there shown consists of an acrylic tube 1 extending through about 270°, and held against its exterior surface successively a photographic negative 2 and a sheet of photosensitised material 3. They are held in position by an elastic rubber blanket 4 which is clipped round the edges of acrylic tube 1, denoted 5 and 6, by end rails 7 and 8 respectively.

The assembly of Figure 1 is easy to put together as shown in Figure 2. The blanket 4 is laid flat, and the photosensitive material and negative 2 laid thereon. The tube 1 is then engaged with its edge 5 in end rail 7 and rolled across as shown by arrow 10 to trap the negative 2 and photosensitive material 3 between itself and the blanket 4. An intermediate position of rolling up is shown dotted. Further rolling as shown by arrow 11 brings edge 6 of the tube into proximity with rail 8 which can then be slightly pulled to engage the hooked edge of rail 8 over edge 6. The rolling action is very effective to provide a crease- and wrinkle-free even contact between the platen and the negative and the negative and the photosensitive sheet.

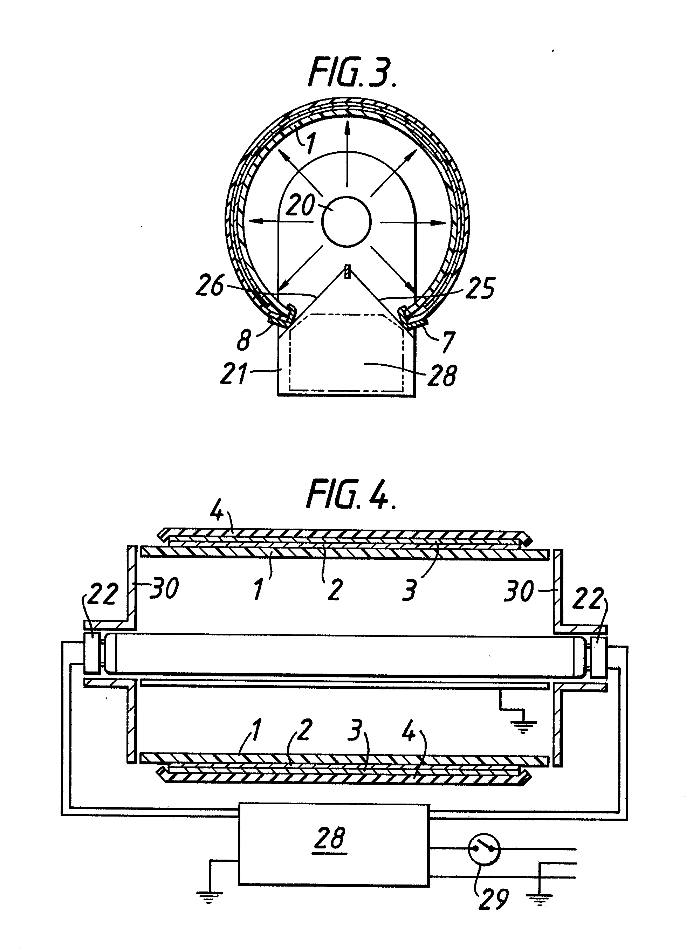

The assembly of Figure 1 may be located around a fluorescent light tube 20 which is mounted on a base 21 by suitable end mounting means 22 shown in Figure 4 diagrammatically. The rails 7 and 8 seat evenly on the pitched upper surfaces 25 and 26 of base 21 and, when so seated, tube 1 is concentric with the fluorescent tube 20.

Located within base 21 is a ballast choke 28 and appropriate switching circuitry 29 to enable the tube to be illuminated for a selectable period of time e.g. from 0 to 300 seconds.

The base bears appropriate end shields 30 to stop the escape of light when the tube is illuminated.

Once exposure has taken place, the assembly of tube, blanket and the materials sandwiched between them is simply removed, one of the strips 7 and 8 detached from its respective edge of acrylic tube 1 and the exposed sensitised material processed further in conventional fashion.

## Claims

1. An exposure unit comprising a transparent cylindrical member (1), a fluorescent tube (20) located in the centre of the cylindrical member (1) and holding means (4) for holding adjacent the outer surface of the transparent cylindrical member (1) one or more sheets (2,3) of material for exposure thereof when the tube (20) is illuminated, characterised in that the surface of the cylindrical member (1) extends through an arc of less than 360° to provide a slot, and that the holding means (4) engages resiliently on the edges (5,6) of the slot.

2. An exposure unit according to claim 1, wherein the width of the slot is greater than the diameter of the fluorescent tube (20).

3. An exposure unit according to claim 1 or 2, wherein the holding means (4) comprises a resilient rubber or like blanket which can be stretched around the exterior convex surface of the cylindrical member (1).

4. An exposure unit according to claim 3, wherein the blanket is not light transmitting, and has an inwardly facing light absorbing surface.

5. An exposure unit according to any one of claims 1 to 4, wherein the cylindrical member is formed by cutting a slot in transparent acrylic tubing and the holding means (4) is a blanket stretched from one edge of the slot (5) to the other (6) around the exterior of the tube (20).

6. An exposure unit according to claim 5, wherein the blanket has a simple hooked rail (7,8) engaging over the edge (5,6) of the slot.

7. An exposure unit acording to any one of claims 1 to 6, wherein the arcuate extent of the cylindrical member (1), from one side of the slot to the other, via the member (1) is between 180° to 300°.

8. An exposure unit according to any one of claims 1 to 7, wherein the fluorescent tube (20) is mounted on a base (21) on to which the assembly of cylindrical member (1) and holding means (4) may be placed in such a fashion that it locates with the tube (20) at the centre of the member (1).

9. An exposure unit according to claim 8, wherein the slot is wide enough to allow the fluorescent tube (20) to be introduced into the centre of the cylindrical member (1) laterally.

10. An exposure unit according to claim 8 or 9, wherein the base (21) on which the fluorescent tube is mounted includes electrical circuitry for energising the illumination of the tube (20), and suitable switching apparatus (29) to enable the tube (20) to be switched on for a selectable period of time.

11. An exposure unit according to any one of claims 8 to 10, wherein the base (21) includes shields or covers (30) so arranged that when the cylindrical member with its blanket is placed in position round the tube (20), no or little light escapes when the tube is switched on.

0268428

## FIG.1.

## FIG.2.

0268428

## FIG.3.

## FIG.4.